(19) **Europäisches Patentamt / European Patent Office / Office européen des brevets**

(11) **EP 4 524 694 A1**

(12) **EUROPEAN PATENT APPLICATION**
published in accordance with Art. 153(4) EPC

(43) Date of publication:
**19.03.2025 Bulletin 2025/12**

(21) Application number: **23852735.2**

(22) Date of filing: **28.06.2023**

(51) International Patent Classification (IPC):
*G06F 3/041* (2006.01)   *G06F 3/14* (2006.01)
*G06F 3/00* (2006.01)   *G06F 3/0354* (2013.01)

(52) Cooperative Patent Classification (CPC):
**G06F 3/00; G06F 3/0354; G06F 3/041; G06F 3/14**

(86) International application number:
**PCT/KR2023/009036**

(87) International publication number:
**WO 2024/034848 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **09.08.2022   KR 20220099257**

(71) Applicant: Samsung Electronics Co., Ltd.
**Suwon-si, Gyeonggi-do 16677 (KR)**

(72) Inventors:
• **NAMKOONG, Kyeong**
  **Suwon-si, Gyeonggi-do 16677 (KR)**
• **KIM, Gwanhyung**
  **Suwon-si, Gyeonggi-do 16677 (KR)**
• **KWON, Yeongjun**
  **Suwon-si, Gyeonggi-do 16677 (KR)**
• **SHIM, Huijun**
  **Suwon-si, Gyeonggi-do 16677 (KR)**

(74) Representative: Walaski, Jan Filip et al
**Venner Shipley LLP
200 Aldersgate
London EC1A 4HD (GB)**

(54) **ELECTRONIC DEVICE FOR RECEIVING TOUCH INPUT AND METHOD FOR CONTROLLING SAME**

(57)   An electronic device includes a display including a touch module, a communication interface, a camera, a sensor, and one or more processors is configured to execute a video call application, control the communication interface to transmit a captured image obtained through the camera to at least one external device connected through the video call application, and based on a touch input being received through the touch module of the display or the touch input being predicted based on at least one of a signal detected through the sensor or a signal received from an input device enabled to receive the touch input, control the communication interface to transmit a screen image of the display to the at least one external device.

FIG. 4

# Description

[Technical Field]

The present disclosure relates to an electronic device and a method controlling the same and more particularly, to an electronic device executing a video call application and a method controlling the same.

[Background Art]

A touch screen means a screen that detects a position touched by a user. Recently, the touch screen has been widely used for not only a mobile phone but also various mobile devices such as a MP3 player, a navigation system, and a PMP and a large display such as an electronic board.

The electronic board is frequently used for sharing a content between conference attendees in a conference room. Also, as a video conference recently increases, the frequency of connecting and using a camera to the electronic board has increased. In general, when having a video conference, the captured images are shared among the conference attendees, and sharing an electronic board screen requires numerous operations each time, causing inconvenience in sharing the electronic board screen.

**[Disclosure]**

**[Technical Solution]**

According to an embodiment, an electronic device receiving a touch input includes a display including a touch module, a communication interface, a camera, a sensor, and one or more processors executing a video call application. The one or more processors may control the communication interface to transmit a captured image obtained through the camera to at least one external device connected through the video call application, and based on the touch input being received through the touch module of the display or the touch input being predicted based on at least one of a signal detected through the sensor or a signal received from an input device enabled to receive the touch input, control the communication interface to transmit a screen image of the display to at least one external device.

According to an embodiment, wherein the sensor may be included in a pen holder. The one or more processors, based on identifying that an electronic pen is detached from the pen holder based on the signal obtained by the sensor while the captured image is being transmitted, may control the communication interface to transmit the screen image of the display instead of the captured image. The one or more processors, based on identifying that the electronic pen is mounted onto the pen holder based on the signal obtained by the sensor while the screen image of the display is being transmitted, may control the communication interface to transmit the captured image instead of the screen image of the display.

According to an embodiment, the sensor may be a proximity sensor. The one or more processors, based on identifying that a user is positioned within a preset distance from the electronic device based on the signal obtained by the proximity sensor while the captured image is being transmitted, may control the communication interface to transmit the screen image of the display instead of the captured image. The one or more processors, based on identifying that the user is not positioned within the preset distance based on the signal obtained by the proximity sensor while the screen image of the display is being transmitted, may control the communication interface to transmit the captured image instead of the screen image of the display. The preset distance may be identified based on a view angle of the camera and a preset size of a space.

According to an embodiment, the input device enabled to receive the touch input includes an active type electronic pen. The one or more processors, based on identifying that the electronic pen is being used based on the signal received from the electronic pen while the captured image is being transmitted, may control the communication interface to transmit the screen image of the display instead of the captured image. The one or more processors, based on identifying that the electronic pen is not being used for a preset time or more based on the signal received from the electronic pen while the screen image of the display is being transmitted, may control the communication interface to transmit the captured image instead of the screen image of the display.

According to an embodiment, the one or more processors may control the display to display an application screen received from an external source device, and based on the touch input to the display being identified or predicted, may control the display to display the application screen received from the external source device and control the communication interface to transmit the application screen to the at least one external device.

According to an embodiment, the one or more processors may control the display to display an application screen received from an external source device, and based on the touch input to the display being identified or predicted in a state that a note function is on, may control the communication interface to capture and transmit the screen image of the display to the at least one external device.

According to an embodiment, the one or more processors, based on the touch input to the display being identified or predicted, may control the communication interface to transmit an image including the captured image in one area of the screen image of the display to the at least one external device.

According to an embodiment, the one or more processors may control the communication interface to adjust a size of the one area including the captured image based on a frequency of the touch input to the display and transmit the image including the captured image in the one area of which size is adjusted to the at least one external device.

According to an embodiment, the one or more processors, based on a preset motion of the user included in the captured image being identified while the screen image of the display is being transmitted to the at least one external device, may control the communication interface to transmit the captured image.

According to an embodiment, the electronic device may include an electronic board and the video call application may include a video conference application. The one or more processors, based on the video conference application being executed, may control the communication interface to turn on the camera and transmit the captured image to the at least one external device. The one or more processors, based on the camera being not turned on, may control the communication interface to transmit the screen image of the display to the at least one external device.

According to an embodiment, a method of controlling an electronic device receiving a touch input includes executing a video call application, transmitting a captured image obtained through a camera to at least one external device connected through the video call application, and based on a touch input being received by a display being identified or the touch input being predicted based on at least one of a signal detected through a sensor or a signal received from an input device enabled to receive the touch input, transmitting a screen image of the display to the at least one external device.

A non-transitory computer readable medium storing computer instructions that when executed by a processor of an electronic device, cause the electronic device to execute a video call application, transmit a captured image obtained through a camera to at least one external device connected through the video call application, and based on a touch input being received by a display or the touch input being predicted based on at least one of a signal detected through a sensor or a signal received from an input device enabled to receive the touch input, transmit a screen image of the display to the at least one external device.

**[Description of Drawings]**

FIG. 1 is a view illustrating a schematic operation of an electronic device according to an embodiment;
FIG. 2A is a block diagram illustrating a configuration of an electronic device according to an embodiment;
FIG. 2B is a view illustrating a detailed configuration of an example of an electronic device according to an embodiment;
FIGS. 3A and 3B are views illustrating a touch sensing method according an embodiment;
FIG. 4 is a flow chart illustrating a method of controlling an electronic device according to an embodiment;
FIG. 5 is a view illustrating a method of converting a transmission screen according to an embodiment;
FIGS. 6, and 7A, 7B, 7C to 7D are views illustrating a method of identifying or predicting a touch input according to an embodiment;
FIGS. 8, and 9A, 9B, to 9C are views illustrating a method of identifying or predicting a touch input according to an embodiment;
FIGS. 10, 11A, and 11B are views illustrating a method of identifying or predicting a touch input according to an embodiment;
FIG. 12 is a view illustrating a method of converting a transmission screen according to an embodiment; and
FIG. 13 is a view illustrating a method of converting a transmission screen according to an embodiment.

**[Mode for Invention]**

The disclosure is specifically described with reference to the appended drawings hereinafter.

The term used in the specification is briefly described and then the disclosure is specifically described.

The terms used in the disclosure are selected as general terms which are currently widely used as much as possible in consideration of functions in the disclosure. However, it may be varied depending on an intention of those skilled in the art or a precedent, appearance of new technologies, or the like. Also, there is a term which is arbitrarily selected by the applicant in a certain case and in this case, its meaning will be specifically described in the relevant description part of the disclosure. Therefore, the term used in the disclosure should be defined based on the meaning of the term and the entire content throughout the disclosure rather than the simple name of the term.

The term "first", "second", or the like may be used to describe various components but the components should not be limited by the term. The term is used only for the purpose of distinguishing one component from another component.

Singular expressions include plural expressions, unless obviously differently defined in the context. In the application, terms such as "include" or "consist of" should be construed as designating that there are such characteristics, numbers, steps, operations, elements, parts, or a combination thereof in the specification, but not as excluding in advance the existence or possibility of adding one or more other characteristics, numbers, steps, operations, elements, parts, or a combination thereof.

The expression "at least one of A or B" should be interpreted to mean any one of "A" or "B" or "A and B".

In the disclosure, "module" or "part" may perform at least one function or operation and may be implemented as hardware or software, or as a combination of hardware and software. In addition, a plurality of "modules" or "parts" may be integrated into at least one module and implemented as one or more processors (not shown) excluding "module" or "part" that needs to be specific hardware.

Hereinafter, with reference to the appended drawings, an embodiment according to the disclosure is specifically described to be easily embodied by those skilled in the art. However, the disclosure may be implemented in various different forms and is not limited to embodiments described herein. Further, part which is not related to the description is omitted in the drawings to clearly describe the disclosure and a similar part is designated with a similar reference numeral throughout the specification.

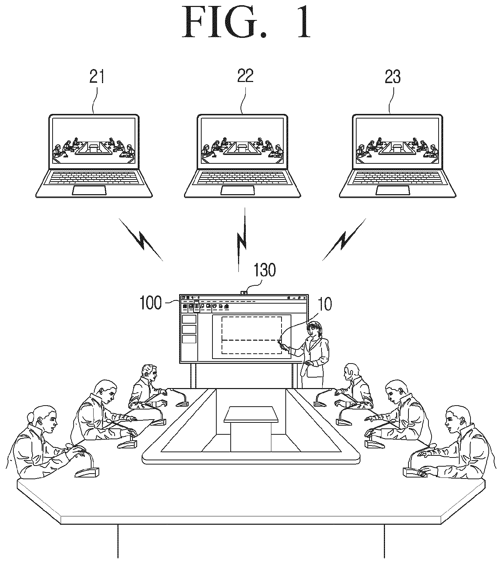

FIG. 1 is a view illustrating a schematic operation of an electronic device according to an embodiment.

With reference to FIG. 1, an electronic device 100 according to an embodiment of the disclosure may be implemented as an electronic board including an input panel such as a touch panel or a touch screen but it is not limited thereto, wherein it may be implemented as various types of electronic devices capable of receiving a touch input such as a mobile phone, a smart phone, an electronic picture frame, a digital information display (DID), a kiosk, a portable media player (PMP), a MP3 player, a game console, a large format display (LFD), a notebook, a laptop, a TV, a monitor, and a projector system. Meanwhile, the disclosure is not limited thereto and the electronic device 100 may include a home appliance, a medical appliance, and the like besides.

The electronic device 100 may execute an application (or software or a program) capable of making a video call (hereinafter, referred to as a video call application) and may transmit a captured image obtained through a camera 130 to at least one external device 21, 22, 23. The video call application may be provided in an icon interface form on a screen of the electronic device 100. According to an embodiment, if the video call application is executed, the camera 130 may be automatically turned on but may be turned on according to a user command depending on a case. According to an embodiment, if the camera 130 is not turned on or is not connected or if it is not possible to capture an image due to other reasons (e.g. a failure), a blank page may be transmitted to the at least one external device 21, 22, 23.

The at least one external device 21, 22, 23 may be a user terminal of a video call attendee connected through the video call application. According to an embodiment, the video call application may be implemented as a video conference application and the at least one external device 21, 22, 23 may be a user terminal of a conference attendee who is remotely attending in a video conference through the video conference application. According to an embodiment, the captured image may be transmitted to the at least one external device 21, 22, 23 via an external server (not shown) communicating with the video conference application but hereinafter, for convenience of the description, transmission from the electronic device 100 to the at least one external device 21, 22, 23 is described.

According to an embodiment, writing on a screen of the electronic device 100 may be possible through a specific function embedded in the video conference application. Here, the specific function may be a screen sharing function, a drawing function, and the like. For example, a touch signal sensed in a touch module included in the electronic device 100 may be transferred to the video conference application and the relevant function may be provided. This may be a separate function from a writing function provided by the electronic device 100. Here, the touch signal may include at least one of a touch coordinate, a touch size, a pen pressure value, or a gradient value.

According to an embodiment, a writing screen of the electronic device 100, for example, the electronic board may be transmitted to at least one external device 21, 22, 23 through the screen sharing function of the video conference application but to change the transmitted image from the captured image to the screen image, a separate operation is needed. For example, the transmitted image may be changed through various menu operations of a depth such as 'Tool > Screen sharing > Select one of document/full screen/blackboard/camera'.

Accordingly, hereinafter, described are various embodiments in which the captured image and the screen image are automatically changed and transmitted depending on a context upon executing the video call application.

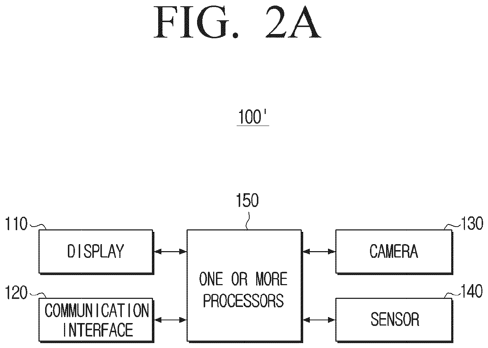

FIG. 2A is a block diagram illustrating a configuration of an electronic device according to an embodiment.

According to FIG. 2A, the electronic device 100 includes a display 110, a communication interface 120, a camera 130, a sensor 140, and one or more processors 150.

The display 110 may be implemented as a display including a spontaneous emission element or a display including a non-spontaneous element and backlight. For example, it may be implemented as various types of displays such as a liquid crystal display (LCD), an organic light emitting diode (OLED) display, a light emitting diode (LED) display, a micro LED display, a mini LED display, a plasma display panel (PDP), a quantum dot (QD) display, and a quantum dot light-emitting diode (QLED) display. The display 110 may include a driving circuit, a backlight unit, or the like which may be implemented in a form such as an a-si TFT, a low temperature poly silicon (LTPS) TFT, or an organic TFT (OTFT). Meanwhile, the display 110 may be implemented as a flexible display, a rollable display, a 3D display, a display in which a plurality of display modules are physically connected, or the like.

According to an embodiment, the display 110 may include a touch module. According to an embodiment, the touch module may include a sensor such as a touch sensor or a proximity sensor or may include a sensor and an operation device. For example, the operation device may be implemented as a micro controller unit (MCU), a micro processor unit (MPU), or the like which reads instructions embedded in a register, an operation circuit, and a control circuit and executes an operation and a control operation but is not limited thereto. According to an embodiment, the touch module may obtain and transfer information about the touch input sensed through the touch sensor to the processor 150. Here, the information about the touch input may include a touch coordinate, a touch size, a pen pressure value, gradient information, or the like. Meanwhile, a passive type electronic pen 10 may not detect a pen pressure and thus the touch module is to transfer a preset pen pressure value to the processor 150.

According to an embodiment, the touch sensor may be implemented as at least one of a capacitive sensor, a decompressive sensor, an infrared sensor, or an ultrasonic sensor. The capacitive sensor means a type of sensor which uses a dielectric with which a surface of the display is coated and when part of a body of a user touches the surface of the display, detects micro electricity excited to the body of the user and calculates a touch coordinate. The decompressive sensor means a type of touch sensor which includes two electrode plates, senses flow of currents as upper and lower plates contact at the touched point, and calculates a touch coordinate. The infrared sensor means a touch sensor using a property that light has a property of going straight even though it is not visible to human eyes and if there is an obstacle, it is prevented and may not proceed. Besides, a surface acoustic wave conduction method, an integral tension measurement method, a piezo effect method, or the like may be used for sensing a touch operation.

Besides, the touch sensor may determine whether a touch object such as a finger or a stylus pen contacts the display 110 or whether it is close to the display 110, for example, by using a magnetic and magnetic field sensor, an optical sensor, a proximity sensor, or the like.

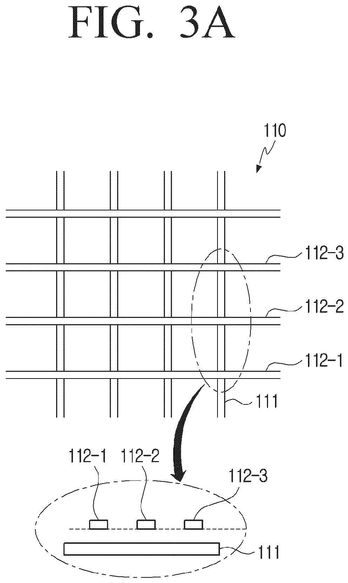

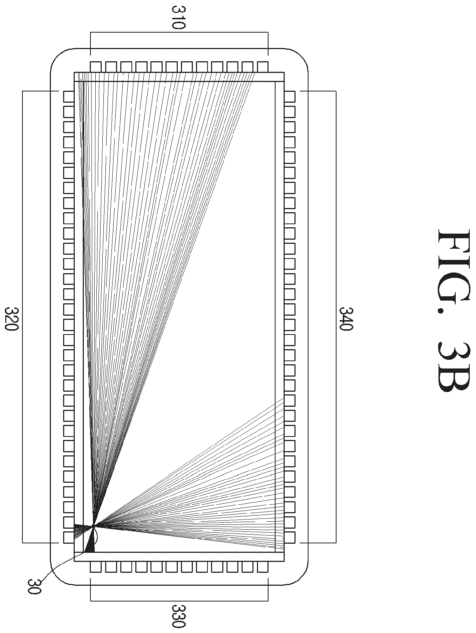

FIGS. 3A and 3B are views illustrating a touch sensing method according an embodiment.

According to an embodiment, a capacitive touch sensor may have an electrode pattern structure as shown in FIG. 3A. A lattice electrode pattern shown in FIG. 3A includes a height direction line 111 and width direction lines 112-1, 112-2, 112-3. This method may include distinguishing a transmission part transmitting an electric field from a receiving part sensing a change of an electric field, sensing the change of the electric field due to contact of a conductor, and detecting a coordinate. Specifically, if the electronic pen 10 itself outputs the electric field, the change of the electric field is sensed in the electrode pattern. If contact of a finger needs to be sensed, it is possible to use a method of dividing crossing electrodes in two directions into an electrode of a first direction as a transmission part and an electrode of a second direction as a receiving part.

According to an embodiment, an infrared touch sensor may be mounted onto the display 110, wherein an infrared LED that is a light emitting element and a photo-transistor (or a photo-diode) that is a light receiving element are arranged to be faced to each other, thereby making an opto-matrix frame. For example, if a screen is selected by an object which may prevent light such as a finger on the display 110 onto which the opto-matrix frame is mounted, light emitted from an infrared light emitting diode is prevented by the finger and is not sensed by the opposite photo-transistor and thus it is possible to know which cell is blocked. For example, as shown in FIG. 3B, the infrared light emitting diodes 310, 320 are disposed at a left side and a lower side of the display 110 and photo-transistors 330, 340 may be arranged at a right side and an upper side thereof. For example, if a specific point 30 on a screen is touched by the electronic pen 10, an area where infrared light is veiled is generated and thus the touch point may be identified. Also, a size and a position of the area where infrared light is veiled (i.e., a shadow) is varied according to a size and a position of a touch object touching the specific point 30, for example, the electronic pen 10, and thus a touch size may be identified.

The communication interface 120 may be a component performing a communication with at least one external device 21, 22, 23. Meanwhile, according to an embodiment, the communication interface 120 may perform a communication with the at least one external device 21, 22, 23 through a server (not shown).

For example, the communication interface 120 may receive an image signal in a streaming or download method from an external device (e.g. a source device), an external storing medium (e.g. USB memory), an external server (e.g. webhard), or the like through a communication method such as AP-based Wi-Fi (Wi-Fi, Wireless LAN network), Bluetooth, Zigbee, a wired/wireless local area network (LAN), a wide area network (WAN), Ethernet, IEEE 1394, High-Definition Multimedia Interface (HDMI), a universal serial bus (USB), a mobile high-definition link (MHL), Audio Engineering Society/European Broadcasting Union (AES/EBU), an optical method, or a coaxial method. Here, an image signal may be any one digital image signal of standard definition (SD) image signal, a High Definition (HD) image signal, a full HD image signal, or an ultra HD image signal but is not limited thereto.

The camera 130 may be turned on according to a preset event and perform capturing. For example, the camera 130 may be turned on if a video call application, for example, a video conference application is executed. According to an embodiment, the camera 130 may be implemented as an external camera which may be communicatively connected to/disconnected from the electronic device 100. According to an embodiment, the camera 130 may be implemented as a camera embedded in a center part of a bezel on an upper side of the electronic device 100.

The camera 130 may convert the captured image to an electric signal and generate image data based on the converted signal. For example, a subject is converted to an electric image signal through a semiconductor optical device, a charge coupled device (CCD), and the converted image signal as above is amplified and converted to a digital signal and then may be signal processed.

The sensor 140 may include various types of sensors. For example, the sensor 140 may include a proximity sensor, a pen holder sensor (e.g. a pressure sensor or a magnetic sensor), or the like. Here, the proximity sensor may be embedded in the display 110 or be embedded in the camera 130 but is not limited thereto. Also, the sensor 140 may include an optical sensor, a laser sensing sensor, etc.

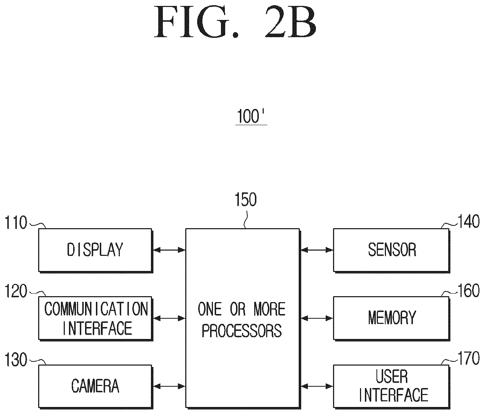

One or more processors 150 (hereinafter, a processor) controls operations of the electronic device 100 overall. Specifically, the processor 150 may be connected to each component of the electronic device 100 to control operations of the electronic device 100 overall. For example, the processor 150 may be electrically connected to the display 110 and memory 160 (FIG. 2B) to control the operations of the electronic device l00 overall. The processor 150 may be configured of one or a plurality of processors.

The processor 150 may perform operations of the electronic device 100 according to various embodiments by executing at least one instruction stored in the memory 160.

According to an embodiment, the processor 150 may be implemented as a digital signal processor (DSP) processing a digital image signal, a microprocessor, a graphics processing unit (GPU), an artificial intelligence (AI) processor, a neural processing unit (NPU), or a time controller (TCON). Meanwhile, the disclosure is not limited thereto and it may include one or more of a central processing unit (CPU), a micro controller unit (MCU), a micro processing unit (MPU), a controller, an application processor (AP), or a communication processor (CP), and an ARM processor or may be defined by the relevant terms. Also, the processor 150 may be realized by a system on chip (SoC) in which processing algorithm is embedded or a large scale integration (LSI) and may be realized in a form of an application specific integrated circuit (ASIC) or a field programmable gate array (FPGA).

FIG. 2B is a view illustrating a detailed configuration of an example of an electronic device according to an embodiment.

According to FIG. 2A, an electronic device 100' includes a display 110, a communication interface 120, a camera 130, a sensor 140, a processor 150, memory 160, and a user interface 170. The detailed description of components overlapped with the components shown in FIG. 2A among the components shown in FIG. 2B is omitted.

The memory 160 is electrically connected to the processor 150 and data required for various embodiments of the disclosure may be stored. The memory 160 may be implemented as memory embedded in the electronic device 100' according to a use for data storage or may be implemented as memory detachable from the electronic device 100'. For example, data for driving the electronic device 100' is stored in memory embedded in the electronic device 100 and data for an extension function of the electronic device 100' may be stored in memory detachable to the electronic device 100'. Meanwhile, memory embedded in the electronic device 100' may be implemented as at least one of volatile memory (e.g. dynamic RAM (DRAM), static RAM (SRAM), or synchronous dynamic RAM (SDRAM), etc.) or nonvolatile memory (e.g. one time programmable ROM (OTPROM), programmable ROM (PROM), erasable and programmable ROM (EPROM), electrically erasable and programmable ROM (EEPROM), mask ROM, flash ROM, flash memory (e.g. NAND flash memory or NOR flash memory, etc.), a hard drive, or a solid state drive(SSD)). Also, memory detachable from the electronic device 100' may be implemented as a memory card (e.g. a compact flash (CF) card, a secure digital (SD) card, a micro secure digital (Micro-SD) card, a mini secure digital (Mini-SD) card, an extreme digital (xD) card, a multimedia card (MMC), etc.), external memory connectable to a USB port (e.g. USB memory), etc.

According to an embodiment, the memory 160 may store a computer program including at least one instruction or instructions for controlling the electric device 100'. For example, the memory 160 may store a control program for controlling the electronic device 100 and the processor 150, an application initially provided by a manufacturer or downloaded from an outside, a database, or related data. For example, the memory 160 may store a video call application, a video conference application, or the like according to an embodiment.

According to an embodiment, the memory 160 may store an image, that is, an input image, various data, information, or the like received from an external device (e.g. a source device), an external storing medium (e.g. a USB), an external server (e.g. webhard), or the like.

According to an embodiment, the memory 160 may be implemented as single memory storing data generated from various operations according to the disclosure. Meanwhile, according to another embodiment, the memory 160 may be implemented to store each different type of data or to include a plurality of memory storing each data generated from different steps.

In the aforementioned embodiment, it is described that various data is stored in the external memory 160 of the processor 150 but at least part of the data may be stored in memory inside the processor 150 according to at least one embodiment among the electronic device 100' or the processor 150.

The user interface 170 may be implemented as a device such as a button, a touch pad, a mouse, and a keyboard or may be implemented as a touch screen performing the aforementioned display function and also the operation input function together. According to an embodiment, the user interface 170 may be implemented as a transceiver of a remote controller and may receive a remote control signal. The transceiver of the remote controller may receive a remote signal or transmit a remote signal from/to an external remote control device through at least one communication method of an infrared communication method, a Bluetooth communication method, or a Wi-Fi communication method.

According to an embodiment, the electronic device 100' may additionally include a speaker, a tuner, and a demodulator. The tuner (not shown) may tune a channel selected by the user among radio frequency (RF) broadcasting signals received through an antenna or all prestored channels and receive the RF broadcasting signals. The demodulator (not shown) may receive and demodulate a digital IF signal (DIF) converted in the tuner and may perform channel demodulation.

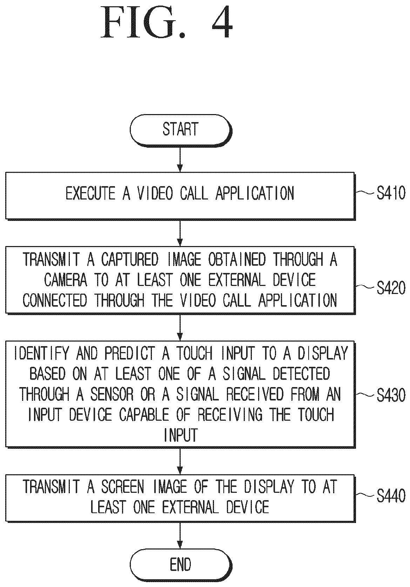

FIG. 4 is a flow chart illustrating a method of controlling an electronic device according to an embodiment.

According to an embodiment shown in FIG. 4, the processor 150 performs a video call application. For example, the processor 150 may perform the video conference application according to a user command. According to an embodiment, if the video call application is executed, the camera 130 may be automatically turned on.

The processor 150 may transmit the captured image obtained through the camera 130 to the at least one external device 21, 22, 23 connected through the video call application (S420). According to an embodiment, the video call application may be implemented as a video conference application and the at least one external device 21, 22, 23 may be a user terminal of a conference attendee who is attending in a video conference through the video conference application. Meanwhile, according to an embodiment, if the camera 130 is not turned on, the processor 150 may transmit a screen image of the display 110.

Hereinafter, for convenience of the description, it is assumed that the video call application is implemented as the video conference application.

If a touch input to the display 110 is identified or predicted based on at least one of a signal detected through the sensor 140 or a signal received from an input device capable of receiving the touch input (S430), the processor 150 may transmit a screen image of the display 110 to the at least one external device 21, 22, 23 (S440). Here, the sensor 140 may include a sensor included in a pen holder, a proximity sensor, a touch sensor, or the like.

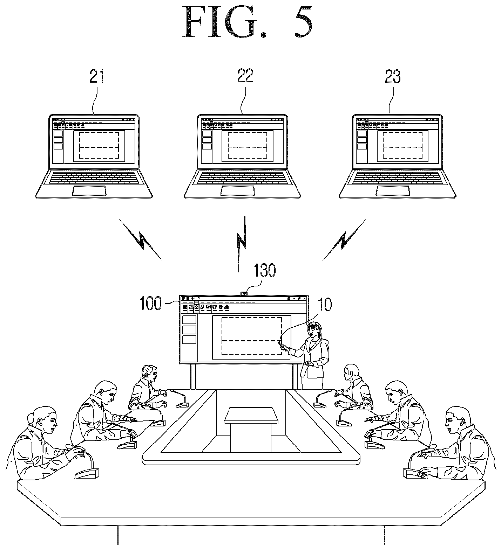

As an example, as shown in FIG. 5, the processor 150 may transmit the screen image of the display 110 to the at least one external device 21, 22, 23 instead of the captured image which is being transmitted to the at least one external device 21, 22, 23. Otherwise, the processor 150 may transmit the screen image of the display 110 together with the captured image to the at least one external device 21, 22, 23.

According to an embodiment, the input device capable of receiving the touch input may be implemented as the electronic pen 10 (FIG. 1). Here, the electronic pen 10 may be implemented in a thin and long pen shape in order that the pen has a certain length and it is easy for the user to grab the pen. Therefore, the electronic pen 10 may be referred to as various terms such as a pen type input device, a stylus pen, and a S-pen but does not need to be necessarily implemented in a pen shape. For example, it may be implemented to have a body in a blunt and flat shape. According to an embodiment, the electronic pen 10 may be implemented in an active method. The electronic pen 10 of an active method in which a sensor of a piezoelectric method is inserted into a pen tip part converts a resistance value or changes capacitance and then loads the value into a touch signal or transmits a pressure value through communication. Accordingly, the processor 150 may identify whether there is a touch input through the electronic pen 10 based on the signal received from the electronic pen 10.

Meanwhile, it is obvious that even if the electronic pen is implemented in a passive method, the touch input may be identified through the touch module. The passive method is a method that the electronic device 100 senses the touch input of the electronic pen 10 and there are a capacitive method, an Electro Magnetic Resonance (EMR) method, or the like. In the case that the electronic pen is implemented in the capacitive method, it may include a conductive tip having a certain area and in the case that the electronic pen is implemented in the EMR method, it may include a coil inducing electricity by an external magnetic field signal. For example, if PIEZO is inserted into a display panel end, the PIEZO detects pressing of the panel and a pressing force is converted into an electric signal and through this, a pen pressure may be measured.

Hereinafter, various embodiments of identifying or predicting a touch input to the display 110 based on at least one of a signal detected through the sensor 140 or a signal received from the input device capable of receiving the touch input are described.

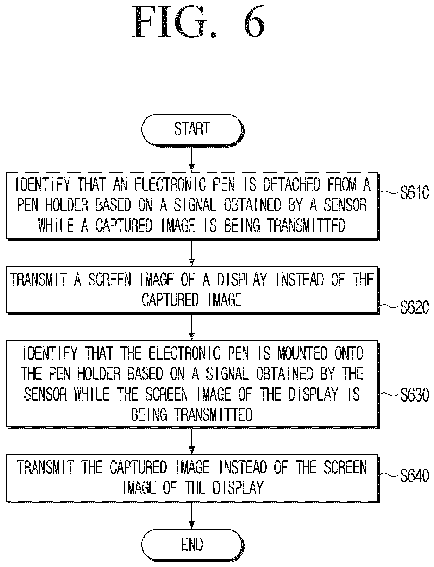

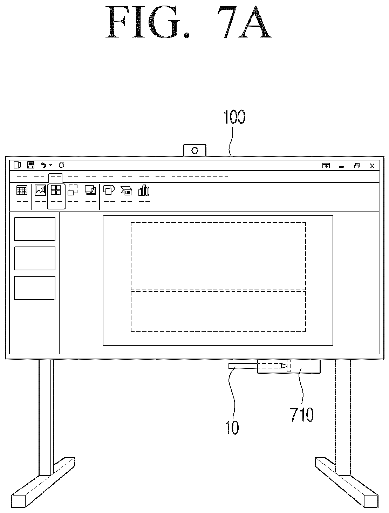

FIGS. 6, and 7A to 7D are views illustrating a method of identifying or predicting a touch input according to an embodiment.

According to an embodiment shown in FIG. 6, the processor 150, if it identifies that the electronic pen 10 is detached from the pen holder based on the signal obtained by the pressure sensor or the magnetic sensor included in the pen holder while the captured image is being transmitted (S610), may transmit the screen image of the display instead of the captured image to the at least one external device 21, 22, 23 (S620).

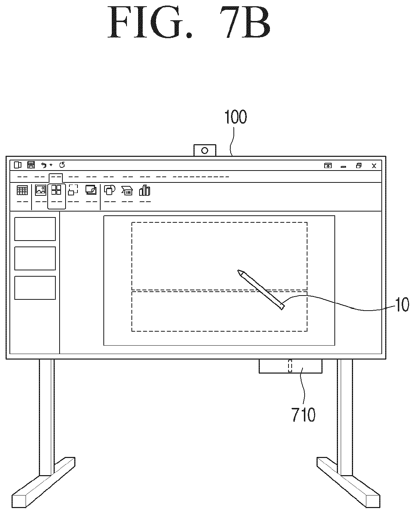

As an example, if the pen holder 710 includes the pressure sensor, a pressure may be detected from the pressure sensor included in the pen holder 710 while the electronic pen 10 is mounted onto the pen holder 710 as shown in FIG. 7A. In this case, the processor 150 may determine that the electronic pen 10 is not used and transmit the captured image to the at least one external device 21, 22, 23. Thereafter, if the electronic pen 10 is detached from the pen holder 710, a pressure is not detected from the pressure sensor included in the pen holder 710 as shown in FIG. 7B. In this case, the processor 150 may determine that the electronic pen 10 is being used and may transmit the screen of the display 110 to the at least one external device 21, 22, 23.

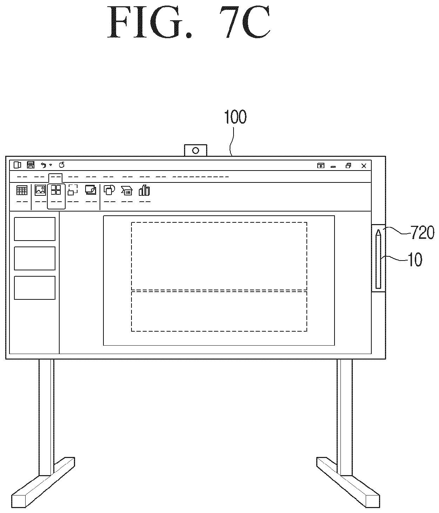

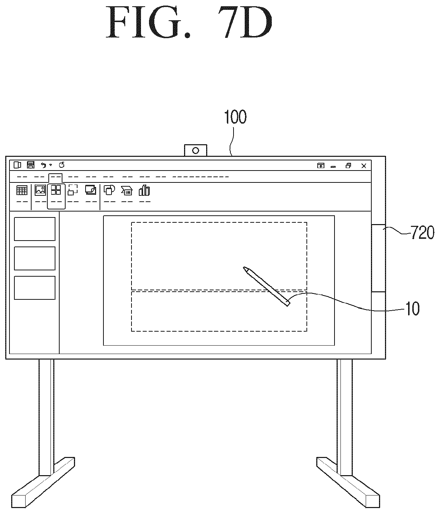

As an example, if the pen holder 710 includes the magnetic sensor, magnetism may be detected from the magnetic sensor included in the pen holder 720 while the electronic pen 10 is mounted onto the pen holder 720 as shown in FIG. 7C. In this case, the processor 150 may determine that the electronic pen 10 is not used and transmit the captured image to the at least one external device 21, 22, 23. Thereafter, if the electronic pen 10 is detached from the pen holder 720, magnetism is not detected from the magnetic sensor included in the pen holder 710 as shown in FIG. 7D. In this case, the processor 150 may assume that the electronic pen 10 is being used and transmit the screen of the display 110 to the at least one external device 21, 22, 23. That is, the processor 150, if the electronic pen 10 is detached from the pen holder 720, may predict that the user will write on the electronic device 100, for example, the electronic board and may transmit the screen image of the display 110 instead of the captured image.

Thereafter, the processor 150, if a pressure or magnetism is detected by the pressure sensor or the magnetic sensor included in the pen holder 710, 720 while the screen image of the display 110 is being transmitted, may identify that the electronic pen 10 is mounted on the pen holder (S630) and may transmit the captured image instead of the screen image of the display 110 (S640).

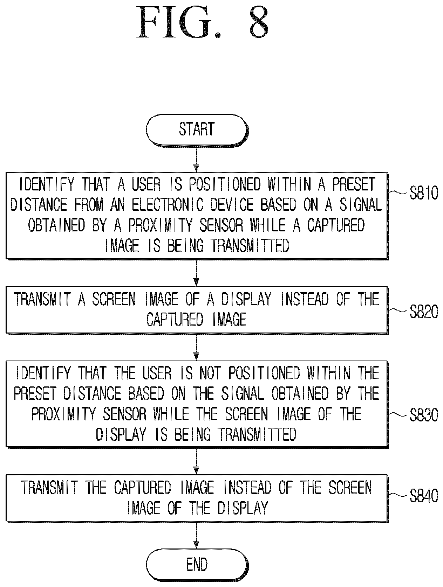

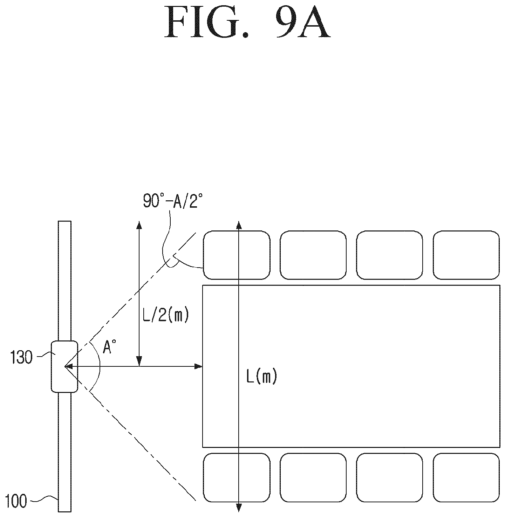

FIGS. 8, and 9A to 9C are views illustrating a method of identifying or predicting a touch input according to an embodiment.

According to an embodiment shown in FIG. 8, if the processor identifies that the user is positioned within a preset distance from the electronic device 100 based on the signal obtained by the proximity sensor while the captured image is being transmitted (S810), it may transmit the screen image of the display 110 instead of the captured image to the at least one external device 21, 22, 23 (S820). Here, the proximity sensor may be embedded in the electronic device 100, for example, the display 110 or may be embedded in the camera 130. That is, the processor 150, if it identifies that the user is being close to the electronic device 100, for example, the electronic board by using the proximity sensor, it may predict that the user will write on the electronic board and may transmit the screen image of the display 110 instead of the captured image. This be because the processor 150 may determine only whether to approach to the electronic board and may not determine an approach intention but under a special situation of a conference through the video conference application, if all conference attendees sit down and the user is being close to the electronic board, the processor may assume the intention for touching a menu, writing on the board, or the like.

Thereafter, if the processor identifies that the user is not positioned within a preset distance based on the signal obtained by the proximity sensor while the screen image of the display 110 is transmitted (S830), it may transmit the captured image instead of the screen image of the display 110 (S840). That is, this is because if the user is far away from the electronic board, the processor may predict that the user will not use the electronic board any more.

According to an embodiment, the preset distance may be identified based on a view angle of the camera 130 and a preset size of a space. Here, the preset area may be a space where attendees of the video conference are positioned. For example, as shown in FIG. 9A, the preset distance D is a minimum distance between the camera 130 attached to the electronic board and the attendees of the conference, wherein it may be calculated based on the view angle of the camera 130 and the preset space, for example, a conference room, and a size of a space (a space including a table, a chair, or the like) where the attendees of the conference are positioned. For example, if the view angle of the camera is A° and a distance between attendees of the conference who faces each other is about L (M), the preset distance may be calculated based on Equation 1 below.

【Equation 1】

$$D = \frac{L}{2} * \tan(90^\circ - \frac{A^\circ}{2})$$

As an example, if the view angle is 110° (a view angle of a general camera is 80°~110°) and a distance between attendees of the conference is 2 M, the preset distance may be D = 2/2 * tan(90°-110°/2) = 1 * tan35° = 0.7M.

With reference to Equation 1, in order that the camera 130 captures the attendees of the conference, the distance between the electronic board to which the camera 130 is attached and the attendees of the conference is to be apart from each other at a preset distance (e.g. 0.7 M).

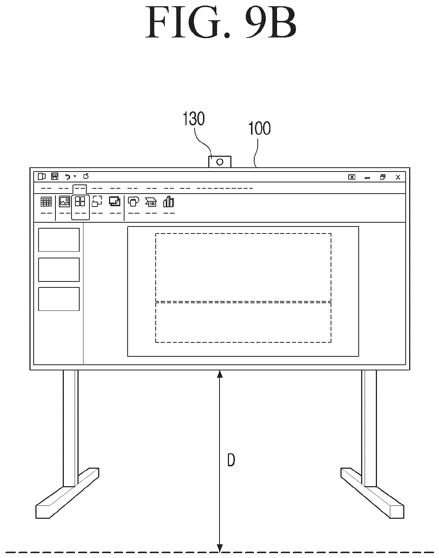

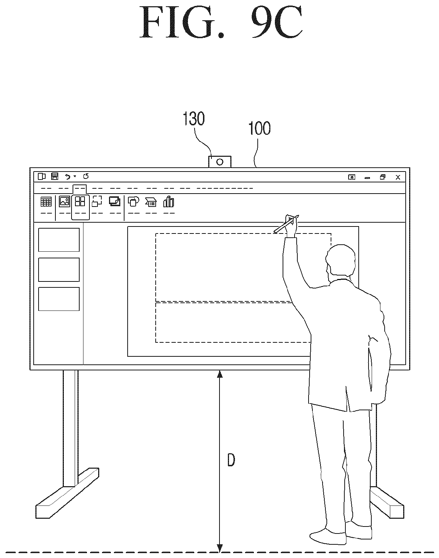

For example, the processor 150, if the user is not recognized within the preset distance D as shown in FIG. 9B, may determine that the user does not use the electronic board and transmit the captured image. Also, the processor 150, if the user is recognized within the preset distance D as shown in FIG. 9C, may determine that the user uses the electronic board and may transmit the screen image of the electronic board.

Meanwhile, in the aforementioned embodiment, whether the user is approaching may be determined in real time but the screen conversion may be made in a criterion of the preset time. For example, after approach of the user is identified, the approach of the user is not continuously identified for a preset time or more, the screen conversion may be made.

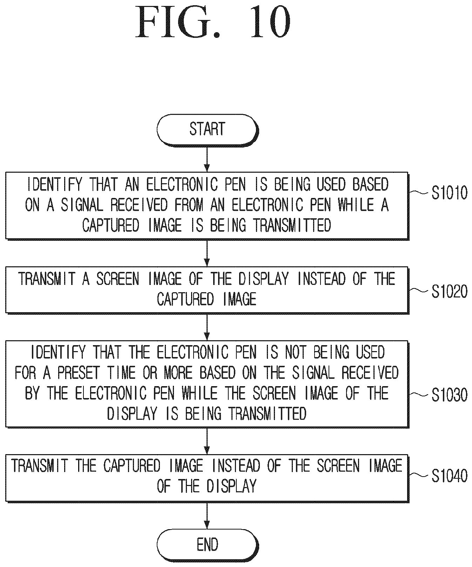

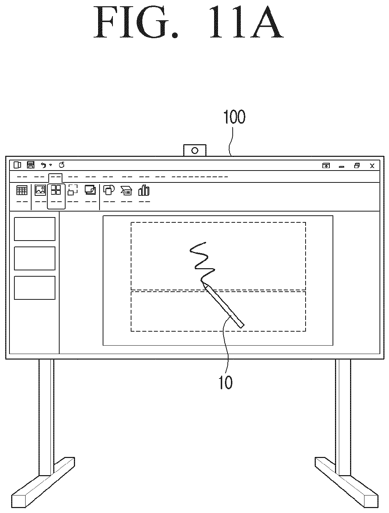

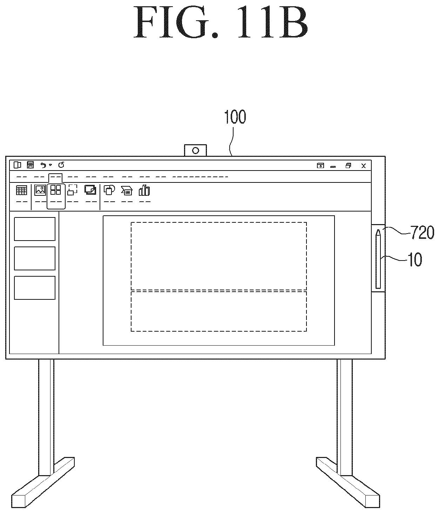

FIGS. 10, 11A, and 11B are views illustrating a method of identifying or predicting a touch input according to an embodiment.

According to an embodiment shown in FIG. 10, if the processor identifies that the electronic pen 10 is being used from the electronic device 100 based on the signal received from the electronic pen 10 while the captured image is being transmitted (S1010), it may transmit the screen image of the display 110 instead of the captured image to the at least one external device 21, 22, 23 (S1020). According to an embodiment, the electronic pen 10 may be implemented in an active method. The electronic pen 10 of an active method in which a sensor of a piezoelectric method is inserted into a pen tip part converts a resistance value or changes capacitance and then loads the value into a touch signal or transmits a pressure (a pen pressure) value through communication. Accordingly, the processor 150 may identify whether the electronic pen 10 is being used, that is, whether there is a touch input based on the signal received from the electronic pen 10.

Thereafter, the processor 150, if it identifies that the electronic pen is not being used for the preset time or more based on the signal received from the electronic pen 10 while the screen image of the display 110 is being transmitted, may transmit the captured image instead of the screen image of the display 110.

For example, as shown in FIG. 11A, the processor 150, if the electronic pen 10 is being used based on the signal received from the electronic pen 10, may transmit the screen image of the electronic device 100, that is, the electronic board to the at least one external device 21, 22, 23. Here, the electronic pen 10 may be implemented in an active method. The electronic pen 10 of the active method in which a sensor of a piezoelectric method is inserted into a pen tip part converts a resistance value or changes capacitance and then loads the value into a touch signal or transmits a pen pressure value through communication. Accordingly, the processor 150 may identify whether there is a touch input through the electronic pen 10 based on the signal received from the electronic pen 10.

On the contrary, the processor 150, if the signal is not received from the electronic pen 10, may identify that the electronic pen 10 is not being used and may transmit the captured image to the at least one external device 21, 22, 23. For example, as shown in FIG. 11B, if the electronic pen 10 is mounted onto the pen holder or is laid on a table, the signal may not be received from the electronic pen 10.

Meanwhile, in the aforementioned embodiment, whether the electronic pen 10 is being used or not may be determined in real time but the screen conversion may be made in a criterion of a preset time. For example, only when it is identified that the electronic pen 10 is not being used continuously for a preset time or more after use of the electronic pen 10 is identified, the screen conversion may be made.

According to an embodiment, the processor 150 may control the display 110 to display the application screen received from the external source device (not shown). In this case, the processor 150, if the touch input to the display 110 is identified or predicted, may control the display 110 to display an application screen received from the external source device (not shown) and transmit the application screen to the at least one external device 21, 22, 23. For example, if the processor 150 displays the application screen received from the external source device (not shown), it may transmit the touch signal corresponding to the touch input to the external source device (not shown) and receive and display the application screen updated according to the touch signal from the external source device (not shown). Here, the touch signal may include at least one of a touch coordinate, a touch size, a pen pressure value, or a gradient value. Accordingly, the application screen received from the external source device (not shown) may be transmitted to the at least one external device 21, 22, 23.

According to an embodiment, the processor 150 may control the display 110 to display the application screen received from the external source device (not shown). In this case, the processor 130, if the touch input to the display 110 is identified or predicted in a state that a note function is on, may capture and transmit the screen image of the display 110 to the at least one external device 21, 22, 23. Here, the note function may be a function of providing a touch layer separate from a display layer in which the application screen is provided. According to an embodiment, the note function may be activated according to selection of the user. For example, this is because if only the screen displayed on the display layer is transmitted when writing is made through the note function, the writing content inputted through the touch layer may not be transmitted.

According to an embodiment, the processor 150, if the touch input to the display 110 is identified or predicted, may transmit an image including the captured image in one area of the screen image of the display 110 to the at least one external device 21, 22, 23. For example, the processor 150, if the touch input is identified or predicted while the application screen is displayed on the display 110 and the captured image is being transmitted to the at least one external device 21, 22, 23, may transmit the image including the captured image in one area on the application screen to the at least one external device 21, 22, 23. In this case, the captured image may be included in a Picture In Picture screen (PIP) form but is not limited thereto.

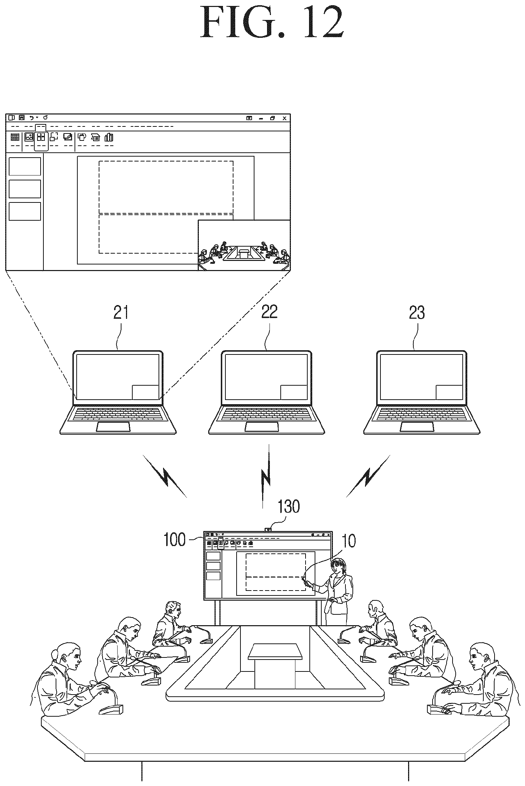

For example, as shown in FIG. 12, the processor 150, if the touch input to the display 110 is identified or predicted, may transmit the image 1210 including the captured image 1211 in one area of the application screen (e.g. a PPT screen) to the at least one external device 21, 22, 23.

According to an embodiment, the processor 150 may adjust a size of one area including the captured image based on a frequency of the touch input to the display 110 and transmit the application screen including the captured image of which size is adjusted to the at least one external device 21, 22, 23.

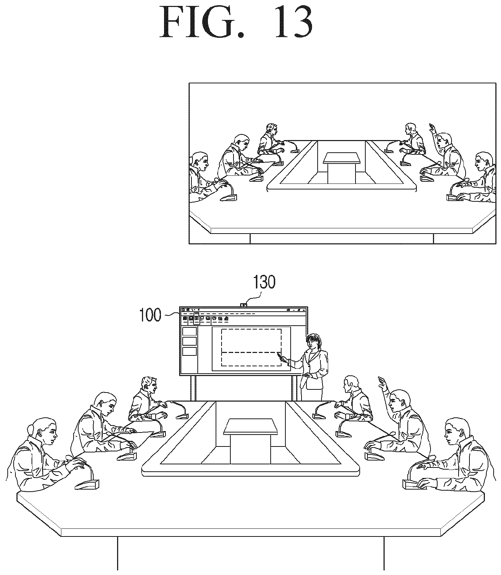

According to an embodiment, the processor 150, if it identifies a preset motion of the user included in the captured image while the screen image of the display 110 is being transmitted to the at least one external device 21, 22, 23, may transmit the captured image to the at least one external device 21, 22, 23. For example, as shown in FIG. 13, there may be a case that a specific attendee speaks, takes a motion related to a conference agenda, raises a hand and speaks, or the like. In this case, there may be a need to focus on the relevant attendee and thus the captured image may be transmitted to the at least one external device 21, 22, 23. Here, the preset motion may include not only conduct but also a mouth shape, or the like. For example, the processor 150 may analyze the captured image and identify the preset motion.

At least part of configurations included in the aforementioned various embodiments and the drawings may be combined with at least part of configurations included in other embodiments and other drawings.

According to the aforementioned various embodiments, when using the video conference application in the electric board, a camera captured screen and an electric board screen may be automatically converted according to the context without an additional user operation and may be transmitted to a terminal of the conference attendee.

Also, even in the case of the electronic board that is not connected to the camera, the electronic board screen instead of a blank screen may be transmitted to the terminal of the attendee of the conference.

Meanwhile, the aforementioned methods according to various embodiments may be implemented in a form of an application installable in the existing electronic device. Also, at least part of the methods according to various embodiments of the disclosure as above may be performed by using a deep learning-based AI model, i.e. a learning network model.

Also the aforementioned methods according to various examples of the disclosure may be implemented only with a software upgrade or a hardware upgrade with respect to the existing electronic device.

Also, it is possible to perform the aforementioned various examples of the disclosure through an embedded server included in the electronic device or the external server of the electronic device.

Meanwhile, according to an embodiment of the disclosure, various examples described above may be implemented as software including instructions stored in machine (e.g. a computer) readable storage media. The machine refers to a device which calls instructions stored in the storage media and is operable according to the called instructions, wherein it may include an electronic device (e.g. an electronic device A) according to the disclosed embodiments. If the instructions are executed by a processor, the processor may perform a function corresponding to the instructions directly or by using other components under control of the processor. The instructions may include a code generated or executed by a compiler or an interpreter. The machine-readable storage media may be provided in a form of non-transitory storage media. Here, 'non-transitory' merely means that the storage media do not include a signal and are tangible, wherein it does not distinguish whether data is stored in the storage media semi-permanently or temporarily.

Also, according to an embodiment of the disclosure, a method according to various examples described above may be provided to be included in a computer program product. The computer program product may be traded between a seller and a buyer as goods. The computer program product may be distributed on-line in a form of the machine-readable storage media (e.g. compact disc read only memory (CD-ROM)) or via an application store (e.g. play store™). In the case of on-line distribution, at least part of the computer program product may be stored at least temporarily or may be generated temporarily in the storage media such as memory of a server of a manufacturer, a server of an application store, or a relay server.

Also, each of components (e.g. a module or a program) according to the various embodiments above may be configured as a single item or a plurality of items, wherein partial subcomponents of the aforementioned relevant subcomponents may be omitted or another subcomponent may be further included in various embodiments. Mostly or additionally, some components (e.g. a module or a program) may be integrated into one item and may identically or similarly perform a function implemented by each of the relevant components before the integration. According to various embodiments, operations performed by a module, a program, or another component may be executed sequentially, in parallel, repetitively, or heuristically, or at least part of the operations may be executed in different orders or be omitted, or another operation may be added.

As the above, preferable examples of the present disclosure are shown and described. However, it is to be understood that the disclosure is not limited to the aforementioned specific examples, and various modifications may be implemented by those skilled in the art without deviating from the gist of the disclosure claimed in the scope of claims. These modifications should not be independently understood from the technical spirit or prospect of the disclosure.

**Claims**

1. An electronic device, comprising:

   a display including a touch module;
   a communication interface;
   a camera;
   a sensor; and
   one or more processors configured to:

   execute a video call application;
   control the communication interface to transmit a captured image obtained through the camera to at least one external device connected through the video call application; and
   based on a touch input being received through the touch module of the display or the touch input being predicted based on at least one of a signal detected through the sensor or a signal received from an input device enabled to receive the touch input, control the communication interface to transmit a screen image of the display to the at least one external device.

2. The electronic device of claim 1, wherein the sensor is included in a pen holder, and
   wherein the one or more processors are configured to:

   based on identifying that an electronic pen is detached from the pen holder based on a signal obtained by the sensor while the captured image is being transmitted, control the communication interface to transmit the screen image of the display instead of the captured image; and
   based on identifying that the electronic pen is mounted onto the pen holder based on the signal obtained by the sensor while the screen image of the display is being transmitted, control the communication interface to transmit the captured image instead of the screen image of the display.

3. The electronic device of claim 1, wherein the sensor is a proximity sensor,
   wherein the one or more processors are configured to:

   based on identifying that a user is positioned within a preset distance from the electronic device based on the signal obtained by the proximity sensor while the captured image is being transmitted, control the communication interface to transmit the screen image of the display instead of the captured image; and
based on identifying that the user is not positioned within the preset distance based on the signal obtained by the proximity sensor while the screen image of the display is being transmitted, control the communication interface to transmit the captured image instead of the screen image of the display, and
wherein the preset distance is identified based on a view angle of the camera and a preset size of a space.

4. The electronic device of claim 1, wherein the input device enabled to receive the touch input is an electronic pen that is of an active type,
   wherein the one or more processors are configured to:

   based on identifying that the electronic pen is being used based on the signal received from the electronic pen while the captured image is being transmitted, control the communication interface to transmit the screen image of the display instead of the captured image; and
   based on identifying that the electronic pen is not being used for a preset time or more based on the signal received from the electronic pen while the screen image of the display is being transmitted, control the communication interface to transmit the captured image instead of the screen image of the display.

5. The electronic device of claim 1, wherein the one or more processors are configured to:

   control the display to display an application screen received from an external source device; and
   based on the touch input to the display being identified or predicted, control the display to display the application screen received from the external source device and control the communication interface to transmit the application screen to the at least one external device.

6. The electronic device of claim 1, wherein the one or more processors are configured to:

   control the display to display an application screen received from an external source device; and
   based on the touch input to the display being identified or predicted in a state that a note function is on, control the communication interface to capture and transmit the screen image of the display to the at least one external device.

7. The electronic device of claim 1, wherein the one or more processors are configured to:
based on the touch input to the display being identified or predicted, control the communication interface to transmit an image including the captured image in one area of the screen image of the display to the at least one external device.

8. The electronic device of claim 7, wherein the one or more processors are configured to:
control the communication interface to adjust a size of the one area including the captured image based on a frequency of the touch input to the display and transmit the image including the captured image in the one area of which size is adjusted to the at least one external device.

9. The electronic device of claim 1, wherein the one or more processors are configured to:
based on a preset motion of a user included in the captured image being identified while the screen image of the display is being transmitted to the at least one external device, control the communication interface to transmit the captured image.

10. The electronic device of claim 1, wherein the electronic device includes an electronic board,

wherein the video call application includes a video conference application; and
wherein the one or more processors are configured to:
based on the video conference application being executed, control the communication interface to turn on the camera and transmit the captured image to the at least one external device and based on the camera being not turned on, control the communication interface to transmit the screen image of the display to the at least one external device.

11. A method of controlling an electronic device, comprising:

execute a video call application;
transmit a captured image obtained through a camera to at least one external device connected through the video call application; and
based on a touch input being received by a display being identified or the touch input being predicted based on at least one of a signal detected through a sensor or a signal received from an input device enabled to receive the touch input, transmitting a screen image of the display to the at least one external device.

12. The method of claim 11, wherein the sensor is included in a pen holder,

wherein the transmitting to the at least one external device includes:

based on identifying that an electronic pen is detached from the pen holder based on the signal obtained by the sensor while the captured image is being transmitted, transmitting the screen image of the display instead of the captured image, and
based on identifying that the electronic pen is mounted onto the pen holder based on the signal obtained by the sensor while the screen image of the display is being transmitted, transmitting the captured image instead of the screen image of the display.

13. The method of claim 11, wherein the sensor is a proximity sensor,

wherein transmitting the screen image of the display to the at least one external device includes:

based on identifying that a user is positioned within a preset distance from the electronic device based on the signal obtained by the proximity sensor while the captured image is being transmitted, transmitting the screen image of the display instead of the captured image; and
based on identifying that the user is not positioned within the preset distance based on the signal obtained by the proximity sensor while the screen image of the display is being transmitted, transmitting the captured image instead of the screen image of the display, and

wherein the preset distance is identified based on a view angle of the camera and a preset size of a space.

14. The method of claim 11, wherein the input device enabled to receive the touch input is an electronic pen of an active type,
wherein the transmitting the screen image of the display to the at least one external device includes:

based on identifying that the electronic pen is being used based on the signal received from the electronic pen while the captured image is being transmitted, transmitting the screen image of the display instead of the captured image; and
based on identifying that the electronic pen is not being used for a preset time or more based on the signal received from the electronic pen while the screen image of the display is being transmitted, transmitting the captured image instead of the screen image of the display.

15. A non-transitory computer readable medium storing computer instructions that when executed by a processor of an electronic device, cause the electronic device to:

   execute an video call application;
   transmit a captured image obtained through a camera to at least one external device connected through the video call application; and
   based on a touch input being received by a display or the touch input being predicted based on at least one of a signal detected through a sensor or a signal received from an input device enabled to receive the touch input, transmit a screen image of the display to the at least one external device.

# FIG. 1

# FIG. 2A

<u>100'</u>

# FIG. 2B

100'

150

110 — DISPLAY

120 — COMMUNICATION INTERFACE

130 — CAMERA

ONE OR MORE PROCESSORS

140 — SENSOR

160 — MEMORY

170 — USER INTERFACE

# FIG. 3A

# FIG. 3B

# FIG. 4

START

EXECUTE A VIDEO CALL APPLICATION ~S410

TRANSMIT A CAPTURED IMAGE OBTAINED THROUGH A CAMERA TO AT LEAST ONE EXTERNAL DEVICE CONNECTED THROUGH THE VIDEO CALL APPLICATION ~S420

IDENTIFY AND PREDICT A TOUCH INPUT TO A DISPLAY BASED ON AT LEAST ONE OF A SIGNAL DETECTED THROUGH A SENSOR OR A SIGNAL RECEIVED FROM AN INPUT DEVICE CAPABLE OF RECEIVING THE TOUCH INPUT ~S430

TRANSMIT A SCREEN IMAGE OF THE DISPLAY TO AT LEAST ONE EXTERNAL DEVICE ~S440

END

# FIG. 5

# FIG. 6

START

IDENTIFY THAT AN ELECTRONIC PEN IS DETACHED FROM A PEN HOLDER BASED ON A SIGNAL OBTAINED BY A SENSOR WHILE A CAPTURED IMAGE IS BEING TRANSMITTED ～S610

TRANSMIT A SCREEN IMAGE OF A DISPLAY INSTEAD OF THE CAPTURED IMAGE ～S620

IDENTIFY THAT THE ELECTRONIC PEN IS MOUNTED ONTO THE PEN HOLDER BASED ON A SIGNAL OBTAINED BY THE SENSOR WHILE THE SCREEN IMAGE OF THE DISPLAY IS BEING TRANSMITTED ～S630

TRANSMIT THE CAPTURED IMAGE INSTEAD OF THE SCREEN IMAGE OF THE DISPLAY ～S640

END

# FIG. 7A

# FIG. 7B

# FIG. 7C

# FIG. 7D

# FIG. 8

START

IDENTIFY THAT A USER IS POSITIONED WITHIN A PRESET DISTANCE FROM AN ELECTRONIC DEVICE BASED ON A SIGNAL OBTAINED BY A PROXIMITY SENSOR WHILE A CAPTURED IMAGE IS BEING TRANSMITTED —S810

TRANSMIT A SCREEN IMAGE OF A DISPLAY INSTEAD OF THE CAPTURED IMAGE —S820

IDENTIFY THAT THE USER IS NOT POSITIONED WITHIN THE PRESET DISTANCE BASED ON THE SIGNAL OBTAINED BY THE PROXIMITY SENSOR WHILE THE SCREEN IMAGE OF THE DISPLAY IS BEING TRANSMITTED —S830

TRANSMIT THE CAPTURED IMAGE INSTEAD OF THE SCREEN IMAGE OF THE DISPLAY —S840

END

# FIG. 9A

# FIG. 9B

# FIG. 9C

# FIG. 10

START

IDENTIFY THAT AN ELECTRONIC PEN IS BEING USED BASED ON A SIGNAL RECEIVED FROM AN ELECTRONIC PEN WHILE A CAPTURED IMAGE IS BEING TRANSMITTED —— S1010

TRANSMIT A SCREEN IMAGE OF THE DISPLAY INSTEAD OF THE CAPTURED IMAGE —— S1020

IDENTIFY THAT THE ELECTRONIC PEN IS NOT BEING USED FOR A PRESET TIME OR MORE BASED ON THE SIGNAL RECEIVED BY THE ELECTRONIC PEN WHILE THE SCREEN IMAGE OF THE DISPLAY IS BEING TRANSMITTED —— S1030

TRANSMIT THE CAPTURED IMAGE INSTEAD OF THE SCREEN IMAGE OF THE DISPLAY —— S1040

END

# FIG. 11A

# FIG. 11B

# FIG. 12

# FIG. 13

## INTERNATIONAL SEARCH REPORT

| International application No. |
|---|
| **PCT/KR2023/009036** |

**A. CLASSIFICATION OF SUBJECT MATTER**

**G06F 3/041**(2006.01)i; **G06F 3/14**(2006.01)i; **G06F 3/00**(2006.01)i; **G06F 3/0354**(2013.01)i

According to International Patent Classification (IPC) or to both national classification and IPC

**B. FIELDS SEARCHED**

Minimum documentation searched (classification system followed by classification symbols)

G06F 3/041(2006.01); G06F 3/0484(2013.01); G06Q 50/10(2012.01); H04L 29/06(2006.01); H04N 7/14(2006.01); H04N 7/15(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 터치(touch), 카메라(camera), 화상통화 어플리케이션(video call application), 센서(sensor), 촬영 영상(shooting video), 화면 영상(screen video)

**C. DOCUMENTS CONSIDERED TO BE RELEVANT**

| Category* | Citation of document, with indication, where appropriate, of the relevant passages | Relevant to claim No. |
|---|---|---|
| X | US 2015-0341400 A1 (MICROSOFT TECHNOLOGY LICENSING, LLC) 26 November 2015 (2015-11-26)<br>See paragraphs [0026], [0030], [0045], [0047], [0050], [0058] and [0066]-[0067]; claim 1; and figures 1-2, 4 and 6. | 1-15 |
| A | US 2016-0021338 A1 (HTC CORPORATION) 21 January 2016 (2016-01-21)<br>See paragraphs [0024]-[0032]; and figures 4-6E. | 1-15 |
| A | US 2007-0171273 A1 (SALEH, Youssef et al.) 26 July 2007 (2007-07-26)<br>See paragraphs [0018]-[0061]; and figures 1-8. | 1-15 |
| A | KR 10-2014-0052739 A (LG ELECTRONICS INC.) 07 May 2014 (2014-05-07)<br>See paragraphs [0079]-[0208]; and figures 2-4. | 1-15 |
| A | KR 10-2017-0029725 A (DARIM VISION CO., LTD.) 16 March 2017 (2017-03-16)<br>See paragraphs [0063]-[0114]; and figures 6-21. | 1-15 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/009036**

| Patent document cited in search report | | | Publication date (day/month/year) | Patent family member(s) | | | Publication date (day/month/year) |
|---|---|---|---|---|---|---|---|
| US | 2015-0341400 | A1 | 26 November 2015 | US | 10275050 | B2 | 30 April 2019 |
| | | | | US | 2015-0338938 | A1 | 26 November 2015 |
| | | | | US | 2015-0338939 | A1 | 26 November 2015 |
| | | | | US | 2015-0338940 | A1 | 26 November 2015 |
| | | | | US | 2015-0339050 | A1 | 26 November 2015 |
| | | | | US | 9990059 | B2 | 05 June 2018 |
| US | 2016-0021338 | A1 | 21 January 2016 | CN | 105278950 | A | 27 January 2016 |
| | | | | CN | 105278950 | B | 18 January 2019 |
| | | | | EP | 2975841 | A1 | 20 January 2016 |
| | | | | US | 9609270 | B2 | 28 March 2017 |
| US | 2007-0171273 | A1 | 26 July 2007 | CN | 101009806 | A | 01 August 2007 |
| | | | | CN | 101009806 | B | 29 September 2010 |
| | | | | EP | 1814330 | A2 | 01 August 2007 |
| | | | | EP | 1814330 | A3 | 19 October 2011 |
| | | | | EP | 1814330 | B1 | 04 December 2013 |
| | | | | JP | 2007-200329 | A | 09 August 2007 |
| | | | | JP | 4553909 | B2 | 29 September 2010 |
| | | | | US | 2011-0234746 | A1 | 29 September 2011 |
| | | | | US | 8593502 | B2 | 26 November 2013 |
| | | | | US | 8872879 | B2 | 28 October 2014 |
| KR | 10-2014-0052739 | A | 07 May 2014 | KR | 10-1392929 | B1 | 09 May 2014 |
| KR | 10-2017-0029725 | A | 16 March 2017 | None | | | |

Form PCT/ISA/210 (patent family annex) (July 2022)